# EUROPÄISCHE PATENTANMELDUNG

(11) **EP 1 099 924 A2**
(43) Veröffentlichungstag der Anmeldung: **16.05.2001**
(21) Anmeldenummer: 00124001.9
(22) Anmeldetag: 04.11.2000
(51) Int. Cl.: F28D 7/10

(54) **Wärmeübertrager**

(30) Priorität: 12.11.1999 DE 19954465
(71) Anmelder: RÖSSLE, Gottfried, D-71640 Ludwigsburg (DE)
(72) Erfinder: RÖSSLE, Gottfried, D-71640 Ludwigsburg (DE)
(74) Vertreter: KOHLER SCHMID + PARTNER

(57) **Zusammenfassung**

Bei einem Wärmeübertrager (1) mit einer von einem Wärmeträgergas durchströmten Innenkammer (2) und einer die Innenkammer (2) umgebenden, von einer Wärmeträgerflüssigkeit durchströmten Außenkammer ist innerhalb der Außenkammer eine die Innenkammer (2) ringförmig umgebende Zwischenkammer (mittlere Ringkammer 4) vorgesehen, die mit der Innenkammer (2) strömungsmäßig verbunden ist. In physikalisch vorteilhafter Weise wirkt die innere Wand der Zwischenkammer mit ihrer größeren Außenfläche mit dem Wärmeträgergas und mit ihrer kleineren Innenfläche mit der Wärmeträgerflüssigkeit zusammen.

## Beschreibung

Die Erfindung betrifft einen Wärmeübertrager mit einer von einem Wärmeträgergas durchströmten Innenkammer und einer die Innenkammer umgebenden, von einer Wärmeträgerflüssigkeit durchströmten Außenkammer.

Es sind Röhren-Wärmeübertrager bekannt, bei denen eine (Wärmeträger-)Flüssigkeit mittels eines (Wärmeträger-)Gases erwärmt wird, welches über Wärmeübertragungsrohre durch einen mit der Flüssigkeit befüllten Kessel geführt wird und seine Wärme durch die Rohrwände hindurch auf die Flüssigkeit überträgt.

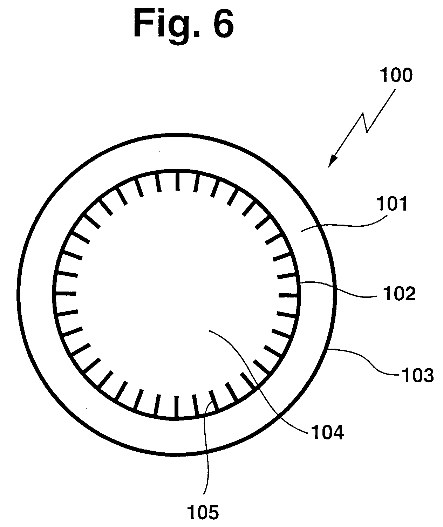

Es sind auch Rippenrohr-Wärmeübertrager **100** bekannt, deren Aufbau schematisch in Fig. 6 dargestellt ist. Dort ist eine mit Flüssigkeit befüllte Außenkammer **101** durch den Zwischenraum zweier konzentrisch angeordneter Rohre **102, 103** gebildet. Das Gas wird durch die vom Innenrohr (Wärmeübertragungsrohr) **102** gebildete Innenkammer 104 geführt, wobei vom Innenrohr **102** Rippen **105** strahlenförmig in die Innenkammer **104** ragen.

Sowohl beim Röhren- als auch beim Rippenrohr-Wärmeübertrager wird die Wärme des Gases auf der kleineren Innenfläche des Wärmeübertragungsrohrs übertragen, während die Flüssigkeit mit der größeren Außenfläche des Wärmeübertragungsrohrs zusammenwirkt. Diese Anordnung ist, wenn das Gas Verunreinigungen enthält, die sich niederschlagen können, zwar wegen des leichter zu reinigenden Innenrohrs vorteilhaft. Da aber der Wärmeübergang zwischen dem Gas und dem Wärmeübertragungsrohr geringer als zwischen der Flüssigkeit und dem Wärmeübertragungsrohr ist, wäre ein verbesserter Wirkungsgrad zu erzielen, wenn die Flüssigkeit mit der kleineren Innenfläche des Wärmeübertragungsrohrs und das Gas mit der größeren Außenfläche zusammenwirkt. Auch kann bei den bekannten Konstruktionen der Gasstrom für eine Zwischenbehandlung nicht unterbrochen werden.

Es ist daher die Aufgabe der Erfindung, bei einem Wärmeübertrager der eingangs genannten Art den Wirkungsgrad weiter zu verbessern.

Diese Aufgabe wird erfindungsgemäß dadurch gelöst, daß innerhalb der Außenkammer eine die Innenkammer ringförmig umgebende Zwischenkammer vorgesehen ist, die mit der Innenkammer strömungsmäßig verbunden ist.

Der mit der Erfindung erzielte Vorteil besteht darin, daß in physikalisch vorteilhafter Weise die innere Wand der Zwischenkammer mit ihrer größeren Außenfläche mit dem Wärmeträgergas und mit ihrer kleineren Innenfläche mit der Wärmeträgerflüssigkeit zusammenwirkt. Während beim bekannten Rippenrohr-Wärmeübertrager Wärme nur über einzige Wärmeübertragungswand übertragen wird, steht erfindungsgemäß mit mindestens drei Wärmeübertragungswänden eine deutliche größere Wärmeübetragungsfläche zur Verfügung. Dank dieser wirksameren Wärmeübertragung ergibt sich somit erfindungsgemäß ein im Vergleich zu bekannten Wärmeübertragern deutlich verringertes Bauvolumen. Mit anderen Worten kann der erfindungsgemäße Wärmeübertrager im Vergleich zu den bekannten Wärmeübertragern bei gleichem Bauvolumen eine erheblich größere Wärmemenge übertragen.

Bei besonders bevorzugten Ausführungsformen der Erfindung sind die Innenkammer, die Außenkammer und die Zwischenkammer koaxial zueinander angeordnet, wobei ihre Wände jeweils durch Rohre gebildet sein können.

Die Innen- und die Außenwand der Zwischenkammer können über Rippen miteinander verbunden sein, so daß jede Rippe die Wärme nach beiden Seiten radial ableiten kann. Da die Rippen etwa doppelt so breit ausgeführt werden können wie die eines bekannten Rippenrohr-Wärmeübertragers, können sie etwa die doppelte Wärmemenge übertragen.

In ganz besonders bevorzugten Ausführungsformen der Erfindung ist die Zwischenkammer durch die Rippen in Umfangsrichtung in separate Kammerfächer unterteilt. Diese Maßnahme ermöglicht es, das Wärmeträgergas durch die einzelnen Kammerfächer in voneinander getrennten Gaszügen und in wechselnden Richtungen zu leiten.

Anders als beim bekannten Rippenrohr-Wärmeübertrager, der nur einzügig betrieben werden kann, können bei dem in Kammerfächer unterteilten Wärmeübertrager in der Zwischenkammer eine Mehrzahl von Gaszügen eingerichtet werden. Diese Möglichkeit ist von erheblicher Bedeutung, z.B. wenn bei partikelhaltigen Gasen wie Verbrennungsabgasen zur Vermeidung von Ablagerungen hohe Gasgeschwindigkeiten gefordert werden, wenn eine Zwischenbehandlung des Gases vorgenommen werden soll, oder wenn das Wärmeträgergas bei einer gleichbleibenden, geregelten Temperatur für eine Zwischenbehandlung aus dem Kreislauf geschleust und nach der Behandlung wieder in den Kreislauf geschleust werden soll.

Bei 32 Rippen bzw. Kammerfächern kann der erfindungsgemäße Wärmeübertrager mit zwei, vier, acht oder 16, bei 36 Rippen bzw. Kammerfächern mit zwei, vier, 6 oder 12 Gaszügen betrieben werden. Die Anzahl der Kammerfächer kann in den Gaszügen des erfindungsgemäßen Wärmeübertragers auch unterschiedlich sein, beispielsweise um die Volumenminderung beim Abkühlen des Gases zu berücksichtigen. Zum Beispiel könnten 36 Kammerfächer wie folgt zu acht Gaszügen gruppiert werden: 6-6-5-5-4-4-3-3.

Die Umlenkung der Gaszüge in andere Kammerfächer kann z.B. über eine oder mehrere zur Zwischenkammer stirnseitig offene Umlenkkammern erfolgen, in die jeweils mindestens zwei Kammerfächer stirnseitig münden. Je nachdem, in wie viele Kammerfächer sich die Umlenkkammer stirnseitig öffnet, kann das Wärmeträgergas parallel auf diese Kammerfächer aufgeteilt werden.

Um einen Gaszug von einem anderen abzugrenzen, können z.B. die Rippen, die ein Kammerfach eines Gaszuges gegenüber einem Kammerfach eines anderen Gaszuges abgrenzen, stirnseitig um die axiale Länge der mindestens einen Umlenkkammer länger als die einen gemeinsamen Gaszug bildenden Rippen sein. Die abgrenzenden Rippen können entweder mit einer größeren Länge gefertigt sein. Oder bei gleicher Länge aller Rippen sind die Rippen, die zur Abgrenzung dienen, durch eine separate Trennwand stirnseitig, z.B. durch Aufstecken, verlängert.

Bei besonders bevorzugten Ausführungsformen ist jede Umlenkkammer drehbar gelagert, wobei sie in ihren verschiedenen Drehstellungen jeweils unterschiedliche Kammerfächer miteinander verbindet bzw. voneinander trennt. Durch Verdrehen von Umlenkkammern kann auf einfachste Weise z.B. die Aufteilung der Gaszüge auf die Kammerfächer, die Strömungsgeschwindigkeit in den Kammerfächern oder die Strömungsabfolge der Gaszüge variiert werden.

Vorzugsweise ist jede Umlenkkammer jeweils durch ein zu den Kammerfächern stirnseitig offenes Segment einer Ringkammer eines drehbar gelagerten Umlenkdeckels gebildet. Zum Einleiten des Wärmeträgergases in die Zwischenkammer sollte der Umlenkdeckel mindestens eine zu den Kammerfächern stirnseitig offene Umlenkkammer und zum Ableiten des Wärmeträgergases aus der Zwischenkammer mindestens eine zu den Kammerfächern stirnseitig offene Umlenkkammer aufweisen.

Bei bevorzugten Ausführungsformen ist an beiden Stirnseiten der Kammerfächer jeweils ein Umlenkdeckel vorgesehen. Die beiden Umlenkdeckel können entweder je für sich verstellt oder gemeinsam für eine synchrone Drehbewegung angetrieben werden.

Bestimmte Anwendungen erfordern eine bestimmte Temperatur des Wärmeträgergases, z.B. an einem Katalysator eine Temperatur von 350°C für eine selektive katalytische Reduktion der Stickoxide. Bei Abweichung von dieser Temperatur sinkt die Wirkung der Entstickungsmaßnahme beträchtlich ab. Bei der selektiven katalytischen Reduktion muß daher der Gasstrom bei einer vorgeschriebenen Temperatur aus dem Wärmeübertragerprozeß ausgeschleust und dem Katalysator zugeführt werden. Nach Passage des Katalysators muß der Gasstrom wieder eingeschleust werden. Selbst bei einer Anlage, die im Dauerbetrieb arbeitet, ist es nicht möglich, die vorgeschriebene Temperatur genau einzuhalten, weil Schwankungen in der Temperatur der Verbrennungsluft unvermeidlich sind und dies sich auf die Abgastemperatur auswirkt. Daher ist es von besonderem Vorteil, wenn die Drehstellung des bzw. der Umlenkdeckel in Abhängigkeit von der Temperatur des Wärmeträgergases automatisch geregelt oder gesteuert wird.

Vorzugsweise ist eine Gasbehandlungseinrichtung wie z.B. ein Katalysator im Strömungsweg des Wärmeträgergases vorgesehen bzw. in den Strömungsweg zuschaltbar. Über die Anzahl der vor einer Gasbehandlungseinrichtung durchströmten Gaszüge (Vorlaufstrecke) läßt sich das Wärmeträgergas auf eine gewünschte Reaktionstemperatur abkühlen und über die Anzahl der nach der Gasbehandlungseinrichtung durchströmten Gaszüge läßt sich die Reaktionsstrecke einstellen.

Der erfindungsgemäße Wärmeübertrager kann z.B. einer Brennkammer oder einem Motor nachgeschaltet werden, um dem Brenngas bzw. dem Motorabgas Wärme zu entziehen. Dazu ist in der Innenkammer und/oder in der Zwischenkammer ein Einlaß für das Brennergas und/oder für das Motorabgas vorzusehen.

Die Erfindung betrifft in einem weiteren Aspekt auch einen Wärmeübertrager mit mehreren von einem Wärmeträgergas durchströmten Kammerfächern, wobei erfindungsgemäß die stirnseitig offenen Kammerfächer durch mindestens ein bewegliches Umlenkelement stirnseitig verschlossen sind, das in seinen verschiedenen Positionen jeweils unterschiedliche Kammerfächer miteinander verbindet bzw. voneinander trennt.

Diese Maßnahme hat den wesentlichen Vorteil, daß durch eine Positionsänderung des Umlenkelements, z.B. des oben beschriebenen Umlenkdeckels oder eines Umlenkschiebers, Strömungsparameter des Wärmeträgergases (wie z.B. Strömungsverlauf, Strömungsrichtung, Durchflußmenge, Temperatur, Vorlauf- und Reaktionsstrecken) je nach Bedarf geändert werden können.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: schematisch ein erstes Ausführungsbeispiel eines erfindungsgemäßen Wärmeübertragers mit einer in 36 Kammerfächer unterteilten mittleren Ringkammer für ein Wärmeträgergas und mit zwei stirnseitig an der mittleren Ringkammer vorgesehenen Umlenkdeckeln in perspektivischer Ansicht;
- Fig. 2: in einer abgewickelten Darstellung den Strömungsverlauf des Wärmeträgergases durch die mittlere Ringkammer in zwei verschiedenen Drehstellungen des in Fig. 1 vorderen Umlenkdeckels;
- Fig. 3: in einer der Fig. 1 entsprechenden Ansicht ein zweites Ausführungsbeispiel eines erfindungsgemäßen Wärmeübertragers mit einem modifizierten vorderen Umlenkdeckel;
- Fig. 4: in einer abgewickelten Darstellung den Strömungsverlauf des Wärmeträgergases durch die mittlere Ringkammer in zwei verschiedenen Drehstellungen des modifizierten vorderen Umlenkdeckels;
- Fig. 5: in einer abgewickelten Darstellung ein drittes Ausführungsbeispiel eines erfindungsgemäßen Wärmeübertragers mit steckbaren Trennwänden in seitlich auseinandergezogener Darstellung; und
- Fig. 6: den Querschnitt eines bekannten Rippenrohr-Wärmeübertragers.

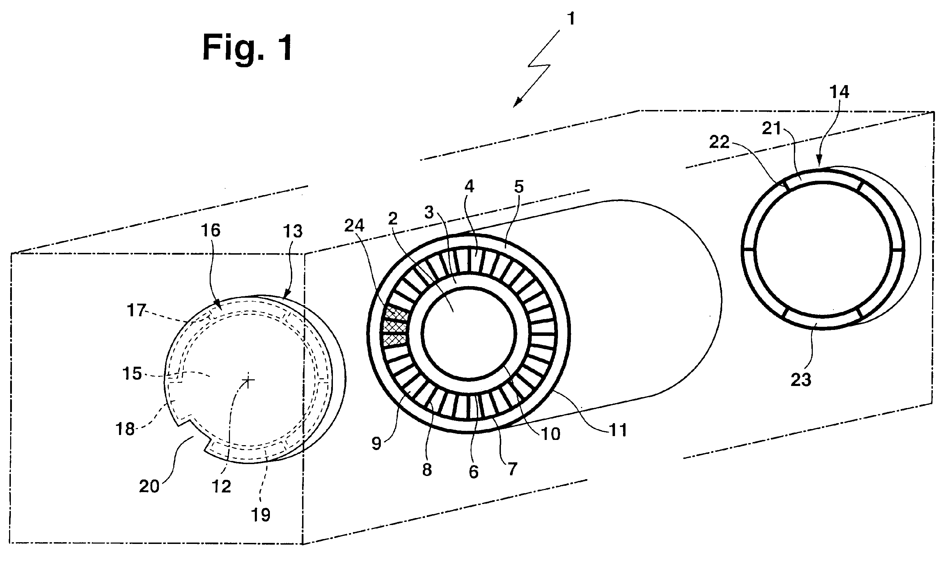

In **Fig. 1** ist mit 1 ein Wärmeübertrager bezeichnet, in dem ein Wärmeträgergas seine Wärme an eine Wärmeträgerflüssigkeit abgibt.

Der Wärmeübertrager 1 umfaßt eine rohrförmige Innenkammer **2** und drei die Innenkammer 2 koaxial umgebende Ringkammern **3**, **4, 5**, wobei benachbarte Kammern jeweils eine gemeinsame Wand haben. Die Innenkammer 2 und die mittlere Ringkammer 4 sind an ihren beiden Stirnseiten jeweils axial offen, während die innere und äußere Ringkammer 3, 5 an ihren Stirnseiten jeweils durch einen Ring (nicht dargestellt) flüssigkeitsdicht verschlossen sind. Die Wände **6, 7** der mittleren Ringkammer 4 sind über 36 radial verlaufende Rippen **8** miteinander verbunden, welche die mittlere Ringkammer 4 in Umfangsrichtung in 36 voneinander getrennte Kammerfächer **9** unterteilen. In Fig. 1 ist die Rohrwand der Innenkammer 2 mit **10** und die Außenwand der äußeren Ringkammer 5 mit **11** bezeichnet.

Die Innenkammer 2 und die mittlere Ringkammer 4 sind an ihrer in Fig. 1 vorderen Stirnseite über einen um die Achse **12** des Wärmeübertragers 1 drehbar gelagerten vorderen Umlenkdeckel **13** gasdicht verschlossen, während ein ringförmiger hinterer Umlenkdeckel **14** die mittlere Ringkammer 4 rückseitig gasdicht verschließt. Der vordere Umlenkdeckel 13 weist innenseitig eine Deckelinnenkammer **15,** die zur Innenkammer 2 hin offen ist, und eine die Deckelinnenkammer 15 umgebende Ringkammer **16** auf, die zur mittleren Ringkammer 4 hin offen und durch Zwischenwände **17** in sieben Umlenkkammern **18, 19, 20** unterteilt ist. Die eine Umlenkkammer 18 ist radial nach innen zur Deckelinnenkammer 15 und die an die Umlenkkammer 18 angrenzende eine Umlenkkammer 20 radial nach außen offen. Der hintere Umlenkdeckel 14 weist innenseitig eine Ringkammer **21** auf, die zur mittleren Ringkammer 4 hin offen ist und durch Zwischenwände **22** in sechs Umlenkkammern **23** unterteilt ist. Im gezeigten Ausführungsbeispiel erstrecken sich die beiden Umlenkkammern 18, 20 in Umfangsrichtung jeweils über drei Kammerfächer 9 und die Umlenkkammern 19, 23 jeweils über sechs Kammerfächer 9. In drei benachbarten Kammerfächern 9 ist jeweils ein Katalysator **24** eingebracht, der z.B. die im Wärmeträgergas enthaltenen Stickoxide katalytisch reduziert.

Die Wärmeträgerflüssigkeit durchströmt die innere und äußere Ringkammer 3, 5, während das Wärmeträgergas von der Rückseite des Wärmeübertragers 1 in die Innenkammer 2 eingeleitet wird. Über die Rohrwand 10 gibt das Wärmeträgergas bereits einen Teil seiner Wärme an die Wärmeträgerflüssigkeit in der inneren Ringkammer 3 ab. Das Wärmeträgergas strömt dann vorderseitig aus der Innenkammer 2 in die Deckelinnenkammer 15 des vorderen Umlenkdeckels 13 und in die Umlenkkammer 18 ein, aus der das Wärmeträgergas um 180° in drei Kammerfächer 9 der mittleren Ringkammer 4 umgelenkt wird. Dort gibt das Wärmeträgergas seine Wärme über die Wände 6, 7 an die Wärmeträgerflüssigkeit in der inneren und äußeren Ringkammer 3, 5 ab.

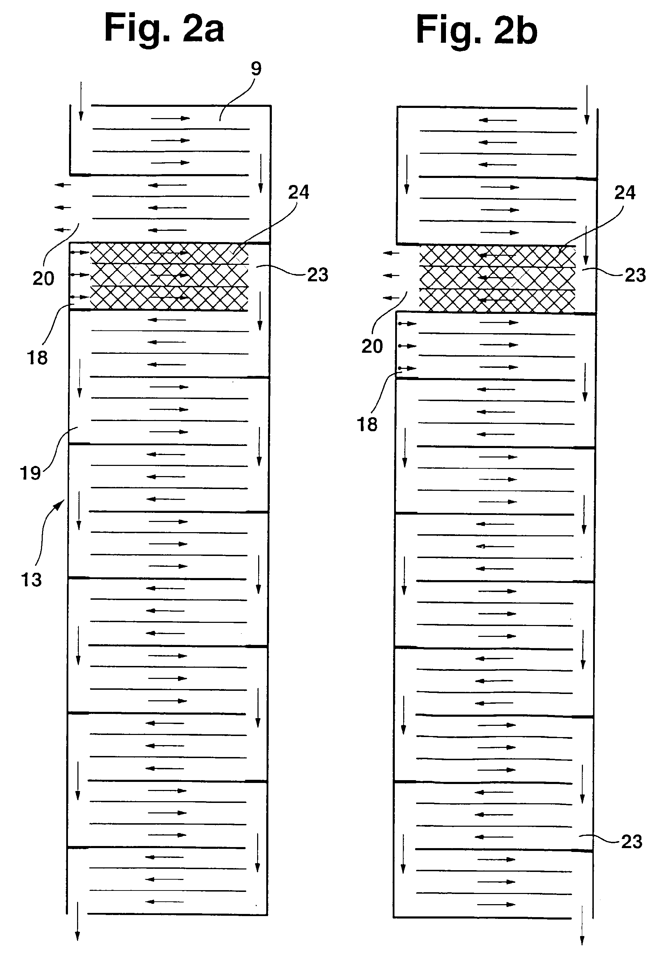

In der in **Fig. 2a** gezeigten Drehstellung des vorderen Umlenkdeckels 13 öffnet sich die Umlenkkammer 18 innenseitig in die drei Kammerfächer 9 (1.Gaszug) mit Katalysator 24, so daß das Wärmeträgergas mit der größtmöglichen Temperatur zum Katalysator 24 geführt wird. Rückseitig wird das Wärmeträgergas dann über die Umlenkkammer 23 in drei andere Kammerfächer 9 (2.Gaszug) und dann vorderseitig über die Umlenkkammer 19 erneut in drei andere Kammerfächer 9 (3.Gaszug) usw. umgelenkt. Wie die Strömungspfeile in Fig. 2a zeigen, durchströmt das Wärmeträgergas die mittlere Ringkammer 4 mäanderförmig jeweils in Zügen von drei Kammerfächern 9, bis es schließlich aus den drei Kammerfächern 9 des letzten (12.) Gaszuges über die Umlenkkammer 20 radial nach außen für ein Ausströmen aus dem Wärmeübertrager 1 umgelenkt wird. Das Wärmeträgergas wird so, jeweils in 12 Gaszügen von drei Kammerfächern 9, durch die mittlere Ringkammer 4 geführt, wobei benachbarte Gaszüge jeweils in entgegengesetzten Richtungen strömen. **Fig. 2b** zeigt eine andere Drehstellung des vorderen Umlenkdeckels 13, bei der die drei Kammerfächer 9 mit Katalysator 24 den letzten Gaszug bilden. Dadurch wird das Wärmeträgergas mit der geringstmöglichen Temperatur und im Vergleich zu Fig. 2a in entgegengesetzter Richtung zum Katalysator 24 geführt.

Im gezeigten Ausführungsbeispiel steuert der vordere Umlenkdeckel 13 den Eintritt des Wärmeträgergases in den 1.Gaszug, den Austritt aus dem letzten Gaszug und gemeinsam mit dem hinteren Drehschieber 14 den Übergang von einem Gaszug in einen anderen Gaszug. Sofern geeignete Umlenkungen (wie z.B. ein Umlenkkasten) vorgesehen sind, kann der Katalysator 24 anstatt in den Kammerfächern 9 auch an beliebig anderer Stelle, insbesondere auch außerhalb der Wand 11, angeordnet sein.

Indem der vordere Umlenkdeckel 13 in Abhängigkeit der Anfangstemperatur des Wärmeträgergases automatisch verstellt wird, sind unterschiedliche Vorlauf- und Reaktionsstrecken und insbesondere eine exakte Temperatureinhaltung am Katalysator 24 möglich. Ausgehend von der in Fig. 2a gezeigten Drehstellung dreht sich der vordere Umlenkdeckel 13 automatisch bei immer wieder sich umkehrender Strömungsrichtung in Richtung abnehmender Vorlaufstrecke um jeweils drei Kammerfächer 9 weiter, bis sich der Katalysator 24 schließlich im letzten Gaszug (Fig. 2b) befindet und das Wärmeträgergas direkt, d.h. ohne vorherige Abkühlung, in den Katalysator 24 einströmt.

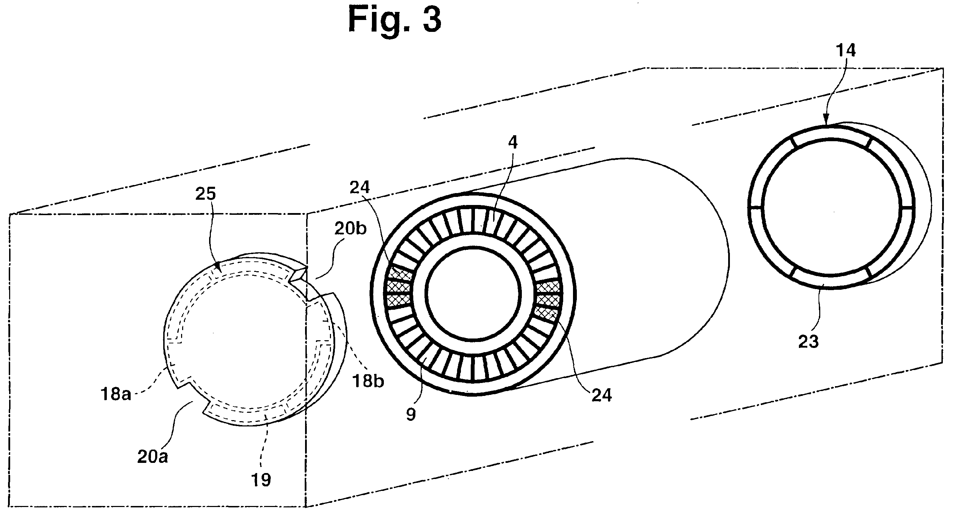

In **Fig. 3** weist der vordere Umlenkdeckel **25** jeweils einander diametral gegenüberliegend zwei Umlenkkammern **18a, 18b** zum Einleiten des Wärmeträgergases in die mittlere Ringkammer 4 sowie zwei Umlenkkammern **20a, 20b** zum Ausleiten des Wärmeträgergases aus der mittleren Ringkammer 4 auf. Da das Wärmeträgergas somit in zwei Bahnen zu je 6 Gaszügen durch die mittlere Ringkammer 4 geleitet wird, sind diametral gegenüberliegend zwei Katalysatoren 24 in jeweils drei Kammerfächern 9 vorgesehen.

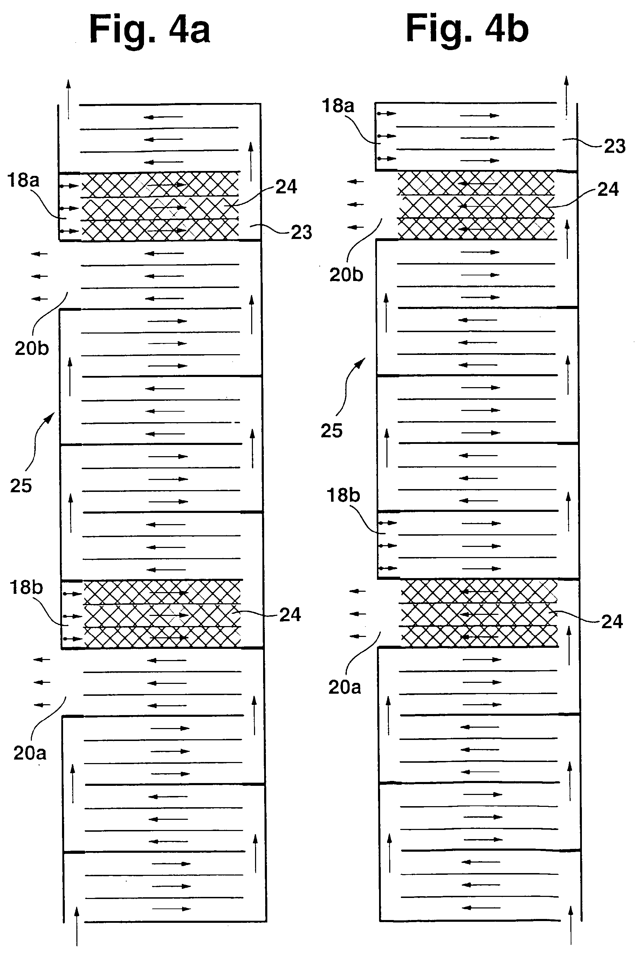

In der in **Fig. 4a** gezeigten Drehstellung des vorderen Umlenkdeckels 25 öffnen sich die Umlenkkammern 18a, 18b innenseitig jeweils in die drei Kammerfächer 9 (1.Gaszug) mit Katalysator 24, so daß das Wärmeträgergas in zwei Bahnen aufgeteilt und mit der größtmöglichen Temperatur zu den Katalysatoren 24 geführt wird. Das Wärmeträgergas wird so in zwei Bahnen mit jeweils 6 Gaszügen von drei Kammerfächern 9 durch die mittlere Ringkammer 4 geführt, bis es schließlich aus den sechs Kammerfächern 9 der jeweils letzten (6.)Gaszüge über die Umlenkkammern 20a, 20b radial nach außen für ein Ausströmen aus dem Wärmeübertrager umgelenkt wird. **Fig. 4b** zeigt den Strömungsverlauf in einer anderen Drehstellung des vorderen Umlenkdeckels 13, bei der jeweils die drei Kammerfächer 9 mit Katalysator 24 den letzten Gaszug bilden. Dadurch wird das Wärmeträgergas mit der geringstmöglichen Temperatur und im Vergleich zu Fig. 4a in entgegengesetzter Richtung zu den Katalysatoren 24 geführt. Im Vergleich zum Umlenkdeckel 13 verdoppelt sich beim Umlenkdeckel 25 die Durchsatzmenge und halbiert sich die maximal mögliche Vorlauf- und Reaktionsstrecke.

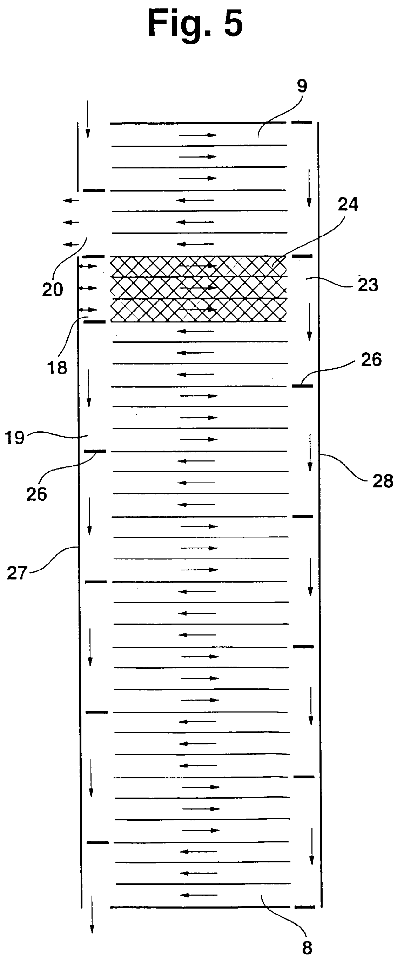

**Fig. 5** zeigt eine weitere Ausführungsform eines Wärmeübertragers mit fest vorgegebenem, der Fig. 2a entsprechendem Strömungsverlauf. Die Rippen 8 der Innenkammer 2, welche einen Gaszug gegenüber einem benachbarten Gaszug abgrenzen, verlaufen in der ganzen Länge des Gaszuges, während die dazwischenliegenden Rippen 8 eines Gaszuges um die Länge der am Ende eines jeden Gaszuges angeordneten Umlenkkammern 18, 19, 20, 23 kürzer sind. Die abgrenzenden Rippen 8 können entweder mit einer größeren Länge gefertigt sein oder, wie im Ausführungsbeispiel gezeigt ist, separate Trennwände **26** sein, die stirnseitig auf die jeweiligen Rippen 8 aufgesteckt werden. Diese Ausführung der Umlenkungen ermöglicht es, mit geringstem Aufwand Wärmeübertrager mit unterschiedlicher Aufteilung der Gaszüge herzustellen. Sofern die beiden Abschlußblenden **27, 28,** die die mittlere Ringkammer 4 stirnseitig gasdicht verschließen, lösbar befestigt sind, läßt sich die Aufteilung je nach Bedarf auch nachträglich noch verändern.

Die rohrförmige Innenkammer 2 des Wärmeübertragers 1 kann als Brennkammer eines Gasbrenners verwendet werden, dessen Wärmeträgergas beim Entlangströmen an der gekühlten Brennkammerwand (Wand 10) bereits einen großen Teil seiner Wärme abgibt. Dadurch kann kaum Luftstickstoff zu Stickstoffoxiden verbrennen, so daß unzulässige Stickoxidkonzentrationen nicht auftreten können. Weiterhin kann die Verbrennungsluft eines Verbrennungsmotors nach der Verbrennung im Motor über entsprechende Leitungen in die mittlere Ringkammer 4 eingeleitet werden.

## Patentansprüche

1. Wärmeübertrager (1) mit einer von einem Wärmeträgergas durchströmten Innenkammer (2) und einer die Innenkammer (2) umgebenden, von einer Wärmeträgerflüssigkeit durchströmten Außenkammer,
dadurch gekennzeichnet,
daß innerhalb der Außenkammer eine die Innenkammer (2) ringförmig umgebende Zwischenkammer (mittlere Ringkammer 4) vorgesehen ist, die mit der Innenkammer (2) strömungsmäßig verbunden ist.

2. Wärmeübertrager nach Anspruch 1, dadurch gekennzeichnet, daß die Innenkammer (2), die Außenkammer und die Zwischenkammer (4) koaxial zueinander angeordnet sind.

3. Wärmeübertrager nach Anspruch 1 oder 2, dadurch gekennzeichnet, daß die Innen- und die Außenwand (6, 7) der Zwischenkammer (4) über Rippen (8) miteinander verbunden sind.

4. Wärmeübertrager nach Anspruch 3, dadurch gekennzeichnet, daß die Zwischenkammer (4) durch die Rippen (8) in Umfangsrichtung in separate Kammerfächer (9) unterteilt ist.

5. Wärmeübertrager nach Anspruch 4, gekennzeichnet durch mindestens eine zur Zwischenkammer (4) stirnseitig offene Umlenkkammer (19, 23), in die mindestens zwei Kammerfächer (9) stirnseitig münden.

6. Wärmeübertrager nach Anspruch 5, dadurch gekennzeichnet, daß eine Rippe (8), die ein Kammerfach (9) eines Gaszuges gegenüber einem Kammerfach (9) eines anderen Gaszuges abgrenzt, stirnseitig um die axiale Länge der mindestens einen Umlenkkammer (19, 23) länger als die einen gemeinsamen Gaszug bildenden Rippen (8) ist.

7. Wärmeübertrager nach einem der Ansprüche 4 bis 6, dadurch gekennzeichnet, daß alle Rippen (8) gleich lang sind und daß die Rippe (8), die zur Abgrenzung dient, durch eine separate Trennwand (26) stirnseitig verlängert ist.

8. Wärmeübertrager nach Anspruch 5 oder 6, dadurch gekennzeichnet, daß jede Umlenkkammer (19, 23) drehbar gelagert ist und in ihren verschiedenen Drehstellungen jeweils unterschiedliche Kammerfächer (9) miteinander verbindet bzw. voneinander trennt.

9. Wärmeübertrager nach Anspruch 8, dadurch gekennzeichnet, daß jede Umlenkkammer (19, 23) jeweils durch ein zu den Kammerfächern (9) stirnseitig offenes Segment einer Ringkammer (17, 21) eines drehbar gelagerten Umlenkdeckels (13, 14; 25) gebildet ist.

10. Wärmeübertrager nach Anspruch 9, dadurch gekennzeichnet, daß der Umlenkdeckel (13, 14; 25) mindestens eine zu den Kammerfächern (9) stirnseitig offene Umlenkkammer (18; 18a, 18b) zum Einleiten des Wärmeträgergases in die Zwischenkammer (4) und/oder mindestens eine zu den Kammerfächern (9) stirnseitig offene Umlenkkammer (20; 20a, 20b) zum Ableiten des Wärmeträgergases aus der Zwischenkammer (4) aufweist.

11. Wärmeübertrager nach Anspruch 9 oder 10, dadurch gekennzeichnet, daß an beiden Stirnseiten der Kammerfächer (9) jeweils ein Umlenkdeckel (13, 14; 25) vorgesehen ist.

12. Wärmeübertrager nach einem der Ansprüche 9 bis 11, gekennzeichnet durch eine automatische Regelung oder Steuerung der Drehstellung des bzw. der Umlenkdeckel (13; 14; 25) in Abhängigkeit von der Temperatur des Wärmeträgergases.

13. Wärmeübertrager nach einem der vorhergehenden Ansprüche, dadurch gekennzeichnet, daß eine Gasbehandlungseinrichtung (Katalysator 24) im Strömungsweg des Wärmeträgergases vorgesehen bzw. in den Strömungsweg zuschaltbar ist.

14. Wärmeübertrager nach einem der vorhergehenden Ansprüche, dadurch gekennzeichnet, daß in der-Innenkammer (2) und/oder in der Zwischenkammer (4) ein Einlaß für Brennergas und/oder ein Einlaß für Motorabgas vorgesehen ist.

15. Wärmeübertrager (1) mit mehreren von einem Wärmeträgergas durchströmten Kammerfächern (9), insbesondere nach einem der vorhergehenden Ansprüche,
dadurch gekennzeichnet,
daß die stirnseitig offenen Kammerfächer (9) stirnseitig durch ein bewegliches Umlenkelement (Umlenkdeckel 13, 14; 25) verschlossen sind, das in seinen verschiedenen Positionen jeweils unterschiedliche Kammerfächer (9) miteinander verbindet bzw. voneinander trennt.
